# EUROPEAN PATENT APPLICATION

(11) **EP 2 584 841 A1**
(43) Date of publication of application: **24.04.2013**
(21) Application number: 11798073.0
(22) Date of filing: 17.06.2011
(51) Int. Cl.: H04W 48/16, H04W 48/18

(54) **WIRELESS BASE STATION AND METHOD FOR MOBILE COMMUNICATION SYSTEM**

(30) Priority: 21.06.2010 JP 2010141075
(71) Applicant: NTT DoCoMo, Inc., Tokyo 100-6150 (JP)
(72) Inventor: UCHIYAMA, Tadashi, Tokyo 100-6150 (JP); OBATA, Kazunori, Tokyo 100-6150 (JP); HARANO, Seigo, Tokyo 100-6150 (JP); YABUKI, Shogo, Tokyo 100-6150 (JP); ISHII, Minami, Tokyo 100-6150 (JP)
(74) Representative: Maury, Richard Philip
(86) International application number: PCT/JP2011/063978
(87) International publication number: WO 2011/162189

(57) **Abstract**

A radio base station includes a radio communication unit that wirelessly communicates with a mobile station being capable of communicating in first and second mobile communication systems; a network communication unit that communicates with a switching center; and a determination unit that determines whether the mobile station measures radio quality in the second mobile communication system, wherein, when the mobile station requests a service not being provided in the first mobile communication system, but being provided in the second mobile communication system, necessity of the measurement of the radio quality by the mobile station is determined by confirming presence of coverage of the second mobile communication system in a cell of the radio base station, and wherein, when the measurement of the radio quality is unnecessary, the mobile station is allowed to switch to the second mobile communication system, without requesting the mobile station to measure the radio quality.

## Description

### TECHNICAL FIELD

The present invention relates to a radio base station and a method for mobile communication systems.

### BACKGROUND ART

In this kind of technical field, schemes of the current and future mobile communication systems have continuously been developed by the 3rd Generation Partnership Project (3GPP). Especially, there is a scheme called "Evolved Universal Terrestrial Radio Access (E-UTRA)" or "Evolved Universal Terrestrial Radio Access Network (E-UTRAN)," that is a successor of the system of the UTRA or UTRAN, which is based on the Wideband Code Division Multiple Access scheme (W-CDMA). The scheme according to the E-UTRA or E-UTRAN is also referred to as the Long Term Evolution system.

Accordingly, various mobile communication systems are currently coexisting, and various services are provided for each system. Consequently, it is possible that a particular type of service is provided for a particular system, but the particular type of service is not provided for another system. For example, suppose that the third generation system such as the W-CDMA, the CDMA2000, the UMTS and the GSM coexists with an LTE system in the same area, and that the LTE system has not provided any voice service for a certain period of time during the initial state of the introduction of the system (during that time, the LTE system exclusively performs data communications). In this case, the voice service is provided for the third generation system, but the voice service is not provided for the LTE system. When a user of the LTE system desires the voice service, it is necessary for the user to communicate in the third generation system. If the user has been served by the LTE system, a handover to the third generation system is required. A scheme is referred to as the Circuit Switching Fall Back (CSFB), in which the user is caused to handover from the LTE system to the third generation system, and thereby the provision of the voice service is enabled. The CSFB has been described in Non-patent document 1, for example.

### RELATED ART DOCUMENT

### [NON-PATENT DOCUMENT]

Non-patent document 1: 3GPP TS 23.272 V8.7.0 (2010-3), 6.2, 6.3, and 6.4

### SUMMARY OF THE INVENTION

### PROBLEM TO BE SOLVED BY THE INVENTION

As described above, when a particular service is not provided in a first system, but the particular service is provided in a second system, a user that has been served in the first system can receive the particular service by performing a handover to the second system. When an inter-system handover is to be performed, a radio base station for the first system directs a mobile station to measure radio quality of a switching target system. The mobile station performs a measurement, and reports a measured value. Subsequently, the radio base station requests a switching center to perform the handover. However, the time interval is not short between the time at which the radio base station has directed the mobile station to measure the radio quality and the subsequent time at which the radio base station has been reported the measured value. Rather, it is likely that a point of time to start providing a service in the second system is delayed due to the time interval.

An objective of the present invention is to enable the mobile station to be quickly switched to the second system, when the mobile station performing a communication in the first system requests a service that is not provided in the first system, but that is provided in the second system.

### MEANS FOR SOLVING THE PROBLEM

A radio base station according to an embodiment of the present invention is a radio base station for a first mobile communication system including:
a radio communication unit that wirelessly communicates with a mobile station, the mobile station being capable of communicating in the first mobile communication system and in a second mobile communication system;
a network communication unit that communicates with a switching center;
a determination unit that determines whether the mobile station is to measure radio quality in the second mobile communication system;
wherein, when a message received from the switching center by the network communication unit indicates that the mobile station is requesting a service, the service not being provided in the first mobile communication system, the service being provided in the second mobile communication system, the determination unit determines whether the measurement of the radio quality by the mobile station is required by confirming presence or absence of coverage of the second mobile communication system in a cell of the radio base station,
wherein, when the measurement of the radio quality is not required, the network communication unit requests of the switching center that the mobile station be switched to the second mobile communication system, without requesting the mobile station to measure the radio quality, and
wherein the radio communication unit reports to the mobile station that the mobile station is to be switched to the second mobile communication system, in response to a command from the switching center.

### EFFECT OF THE PRESENT INVENTION

According to an embodiment of the present invention, when the mobile station communicating in the first system requests the service that is not provided in the first system, but that is provided in the second system, the mobile station can be quickly switched to the second system. By this, it is possible to reduce the time until the start of the service provisioning.

### BRIEF DESCRIPTION OF THE DRAWINGS

FIG. 1 is a diagram showing an operating sequence according to an embodiment;
FIG. 2 is a block diagram of a radio base station according to the embodiment;
FIG. 3 is a diagram illustrating a first determination basis for determining presence or absence of coverage;
FIG. 4 is a diagram illustrating a second determination basis for determining the presence or absence of the coverage;
FIG. 5 is a diagram showing frequency bands;
FIG. 6 is a diagram showing a sequence for performing redirection, instead of a handover;
FIG. 7 is a diagram showing a sequence for a case where a handover is performed from a waiting state; and
FIG. 8 is a diagram showing a sequence for a case where redirection is performed from the waiting state.

### EMBODIMENTS FOR CARRYING OUT THE INVENTION

An embodiment will be explained from the following viewpoints.
1. Operational example
2. Radio base station
3. Presence or absence of coverage
4. Modified examples
4.1 Redirection
4.2 Handover from a waiting state
4.3 Redirection from a waiting state

### <Embodiment 1>

### <1. Operational example>

Hereinafter, an embodiment of the present invention will be explained. In the embodiment, at least a portion of a first mobile communication system and a portion of a second mobile communication system geographically overlap, and User Equipment (UE) can perform an inter-system handover. It is assumed that the first mobile communication system is an LTE system. It is assumed that the second mobile communication system is a third generation system such as the UTRA system. However, systems to which the embodiment can be applied are not limited to the LTE and the UTRA systems. The systems can be other systems. The present invention can be applied to systems according to the GERAN (GSM) scheme, the CDMA2000 scheme, and the UMTS scheme, as well as a fourth generation mobile communication system. The present invention can be applied to a state where some services are provided by some systems, but not provided by other systems.

Suppose that the first mobile communication system (LTE) has not provided any voice service for a certain period of time during an initial state of an introduction of the system (during that time, the first mobile communication system (LTE) exclusively performs data communications). In this case, voice services are provided in the second mobile communication system (3G), but the voice services are not provided in the first mobile communication system. Therefore, when a user of the first mobile communication system (LTE) desires a voice service, the user is required to perform communications in the second mobile communication system (3G). Therefore, it is required to perform an inter-system handover. This handover is not a handover that is performed in response to degradation of the radio quality or congestion of the system, but a hand over from a system where a particular service is not provided to a system where the particular service is provided.

A mobile station (User Equipment: UE) is user equipment that is capable of communicating in both the first and second mobile communication systems. The user equipment may be a cellular telephone, an information terminal, a personal digital assistant, a mobile personal computer, or the like.

A radio base station (eNB) performs at least operations in the first mobile communication system (LTE). The radio base station may also be referred to as an access point AP. The radio base station (eNB) may perform not only processes of the first mobile communication system, but also processes of the second mobile communication system (3G). The radio base station (eNB) in the first mobile communication system performs radio resource management, IP header compression and encryption processes, routing of user plane data, and scheduling of a paging message or broadcast information, for example.

A switching center (MME) is connected to the radio base station (eNB) through an S1 interface. The switching center is a mobility management entity (MME) that manages mobility of the mobile station. Specifically, the switching center performs mobility management among the 3GPP access networks; tracking area (location registration area) list management; selection of a gateway (GW) of a packet data network (PDN); selection of a serving gateway; selection of a switching center (MME) during a handover; and processes regarding roaming, authentication, bearer management, subscriber information management, mobility management, call origination and termination control, charging control, and QoS control, for example.

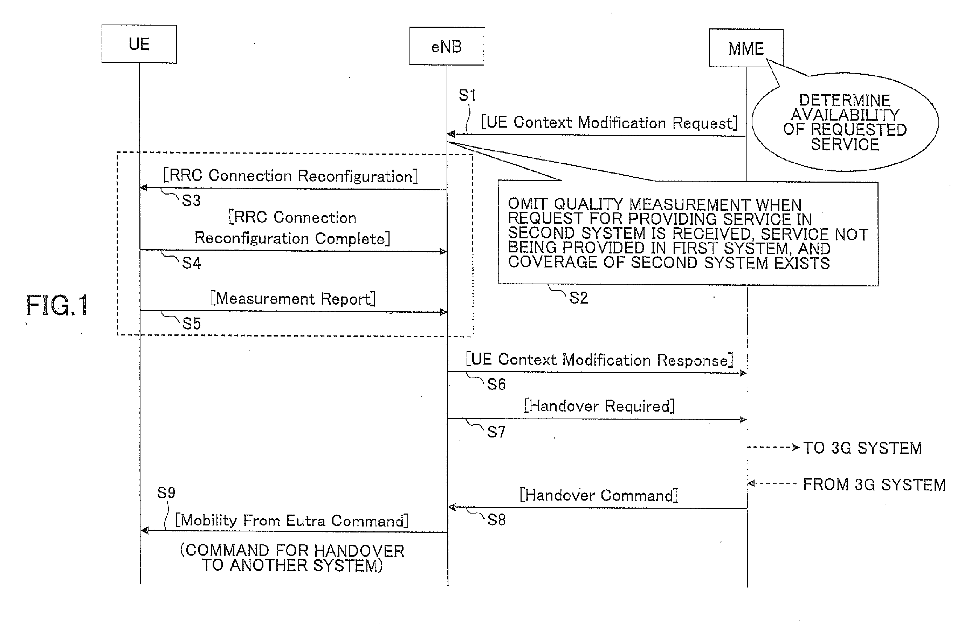

FIG. 1 shows a sequence according to the embodiment of the present invention. A user of the mobile station (UE) being served in the first mobile communication system (LTE) desires a voice service, and a message indicating that intent is delivered to the switching center (MME) through the radio base station (eNB) (not shown). The voice service is not provided in the first mobile communication system (LTE), but it is provided in the second mobile communication system (3G). Therefore, the switching center (MME) determines that a handover from the first mobile communication system to the second mobile communication system is to be performed for the user.

At step S1, the switching center (MME) reports to the radio base station (eNB) that the handover from the first mobile communication system (LTE) to the second mobile communication system (3G) is to be performed for the mobile station (UE) by transmitting a connection setting request signal (UE Context Modification request) to the radio base station (eNB).

At step S2, the radio base station (eNB) confirms presence or absence of coverage of the second mobile communication system in the cell of the radio base station (eNB) itself. When the coverage of the second mobile communication system (3G) exists in the cell of the first mobile communication system (LTE), in general, it may be considered that the mobile station (UE) being served by the cell can receive a radio wave from the second mobile communication system stronger than or equal to a predetermined value. However, the determination of the presence or absence of the coverage in the embodiment is not always based on the measured value of the reception level of the actual radio wave. Precisely, "the coverage exists" means that "it can be estimated that the coverage exists." Accordingly, the determination that "the coverage does not exist" at step S2 means that it is not possible to estimate that the coverage exists. It may be possible to confirm that the coverage exists by actually measuring the radio waves. The presence or absence of the coverage is determined based on a predetermined determination basis. A specific determination method will be explained later.

When it is determined that there exists the coverage of the second mobile communication system (3G) in the cell of itself, it is not necessary that the radio quality of the second mobile communication system be measured. In this case, the radio base station (eNB) performs steps of S6 and S7 immediately after step S1.

At step S6, the radio base station (eNB) transmits a connection setting response signal (UE Context Modification Response) to the switching center (MME). This is a response to the connection setting indicating signal transmitted at step S1.

At step S7, the radio base station (eNB) transmits a handover preparation request signal (Handover Required) to the switching center (MME). By this, the switching center (MME) transmits the command to the second mobile communication system, so that the handover from the first mobile communication system to the second mobile communication system (3G) can be performed for the mobile station (UE). Unlike conventional cases, subsequently to steps S1 and S6, the hand over preparation request signal of step S7 is quickly transmitted to the switching center (MME).

At step S8, in response to a response signal from the second mobile communication system (3G), which is the destination of the handover, the switching center (MME) transmits a handover preparation signal and a handover command to the radio base station (eNB). For the simplicity of the illustration, the communications between the switching center (MME) and the second mobile communication system (3G), which is the destination of the switching, are not shown in the figure.

At step S9, in response to the handover preparation signal, the radio base station (eNB) transmits a handover indicating signal (Mobility From EUTRA Command) to the mobile station (UE). It is not shown in the figure, but subsequently the mobile station (UE) transmits an up link signal to the second mobile communication system (3G), the mobile station (UE) synchronizes with the second mobile communication system (3G), and the mobile station (UE) performs the handover to the second mobile communication system. Then, the provisioning of the voice service to the mobile station (UE) is started, after the line for the voice service in the second mobile communication system (3G) has been established.

On the other hand, suppose that, at step S2, the radio base station (eNB) determines that the coverage of the second mobile communication system does not exist in the cell of the first mobile communication system. As described above, "the coverage does not exist" at step S2 means that it is not possible to estimate that the coverage exists. It may be possible to confirm that the coverage exists by actually measuring the radio waves. When it is determined, at step S2, that the coverage does not exist, the radio base station (eNB) transmits, at step S3, a connection setting and measurement indicating signal (RRC Connection Reconfiguration) to the mobile station (UE). In response to this, the mobile station (UE) transmits a connection setting and measurement indication response signal (RRC Connection Reconfiguration Complete) to the radio base station (eNB).

At step S3, it is designated by the connection setting and measurement indicating signal as to when the mobile station (UE) measures the radio quality regarding the second mobile communication system, for example. The mobile station (eNB) measures the radio quality of the second mobile communication system (3G) at the designated timing (a gap interval that is reserved for measuring radio quality of a different frequency or a different RAT system). In the embodiment, the radio quality has the same meaning as "the reception level," and the radio quality may be measured through a suitable arbitrary quantity, that has been known in the corresponding technical field. For example, the radio quality or the reception level may be expressed in terms of the received power, the electric field strength (Received Signal Strength Indicator: RSSI), the desired wave received power (RSCP), the pathloss, the S/N, and the E_{C}/N₀.

At step S5, the mobile station (UE) reports a measurement value of the radio quality to the radio base station (eNB) by transmitting a measurement result reporting signal (Measurement Report) to the radio base station (eNB). When the measurement value of the radio quality is better than or equal to a predetermined threshold value, the coverage of the second mobile communication system exists. Namely, at step S2, it has been determined that the coverage does not exist by the determination basis that is different from the actual measurement. However, when the mobile station (UE) actually measures, it is confirmed that the coverage exists. In this case, the mobile station (UE) can perform the handover from the first mobile communication system to the second mobile communication system by performing the procedures of steps S6, S7, S8, and S9. When the measured value of the radio quality is not better than the predetermined threshold value, the coverage of the second mobile communication system actually does not exist. Thus the handover to the second mobile communication system is not allowed for the mobile station (UE). In this case, the radio base station (eNB) does not receive the handover preparation response signal such as that of step S8. The mobile station (UE) does not receive the handover indicating signal such as that of step S9.

In this manner, when it is confirmed that the coverage exists at step S2, the radio base station (eNB) proceeds with the preparation of the handover without directing the mobile station (UE) to measure the radio quality. Therefore, steps S3, S4, and S5 can be omitted. With this, the time required for steps S3, S4, and S5 can be reduced, and the point of time for the mobile station (UE) to receive the service provision is advanced corresponding to that amount.

### <2. Radio base station>

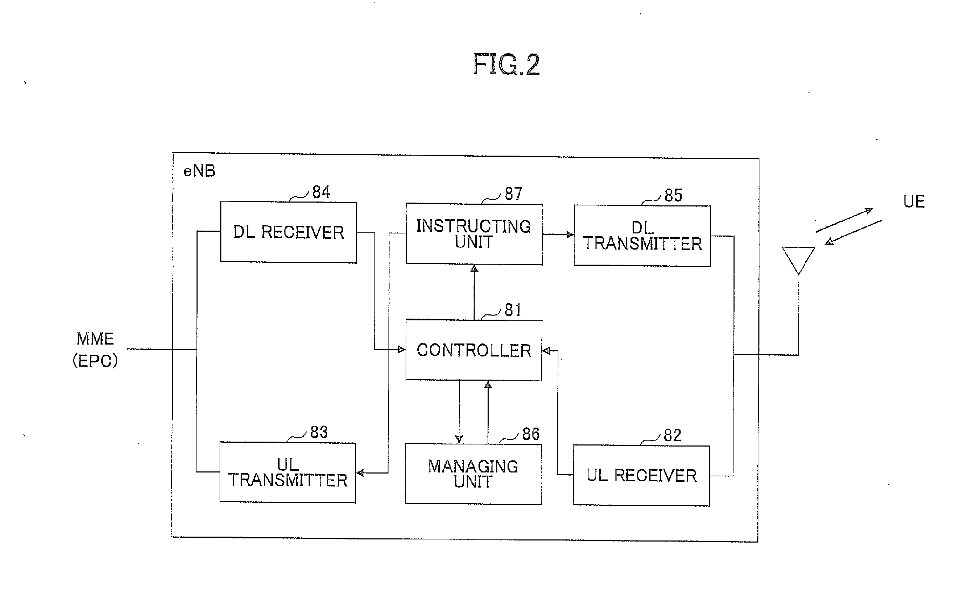

FIG. 2 shows the radio base station (eNB) that can be used in the embodiment. FIG. 2 shows elements, among various functional elements included in the radio base station (eNB), that are particularly related to the embodiment. There are shown in the figure a controller 81; an up link receiver 82; an up link transmitter 83; a down link receiver 84; a down link transmitter 85; a managing unit 86; and an instructing unit 87.

The controller 81 controls operations of various functional elements in the radio base station (eNB).

The up link (UL) receiver 82 receives up link radio signals transmitted from the mobile station (UE). When the radio base station (eNB) determines that the coverage does not exist, the connection setting and measurement indication response signal and the measurement result reporting signal are received.

The up link (UL) transmitter 83 transmits a signal to be reported to the switching center (MME) belonging to an Evolved Packet Core (EPC). The signal is transmitted through the S1 interface. For the case of the embodiment, especially, the connection setting response signal and the handover preparation response signal are transmitted.

The down link (DL) receiver 84 receives a signal from the switching center (MME). The signal is also transmitted through the S1 interface. For the case of the embodiment, especially, the connection setting indicating signal and the handover preparation response signal are received.

The down link (DL) transmitter 85 wirelessly transmits a down link signal to the mobile station (UE). For the case of the embodiment, especially, the handover indicating signal is transmitted. Further, when the radio base station (eNB) determines that there is no coverage, the connection setting and measurement indicating signal and the handover indicating signal are transmitted.

The managing unit 86 manages the presence or absence of the coverage for each of the systems. The specific method of determining the presence or absence of the coverage will be explained later.

The instructing unit 87 provides the signals to be transmitted to the mobile station (UE) and/or the switching center (MME) for the DL transmitter 85 and/or the UL transmitter 83.

### <3. Presence or absence of coverage>

Hereinafter, there will be explained the determination basis for the radio base station (eNB) of the first mobile communication system (LTE) to determine the presence or absence of the coverage of the second mobile communication system (3G) in its own cell. When the user moves from a system to another system, the frequencies for the corresponding systems and the types of the radio access technology (RAT) for the corresponding systems are usually different. Therefore, in principle, the mobile station measures the radio quality of the switching target system, prior to the handover. However, for the condition explained below, communications can be successfully performed in the switching target system, provided that communications can be successfully performed in the originating system. Thus, it can be expected that the coverage of the switching target system exists, without measuring the radio quality. In such a case, by omitting the measurement of the radio quality of the switching target system by the mobile station prior to the handover, the point of time to start providing the service can be advanced in the switching target system.

The determination bases below are for exemplification only. The presence or absence of the coverage may be determined based on a basis other than these bases.

(1) A first determination basis is such that, when an antenna system facility has been shared, it is determined that the coverage exists.

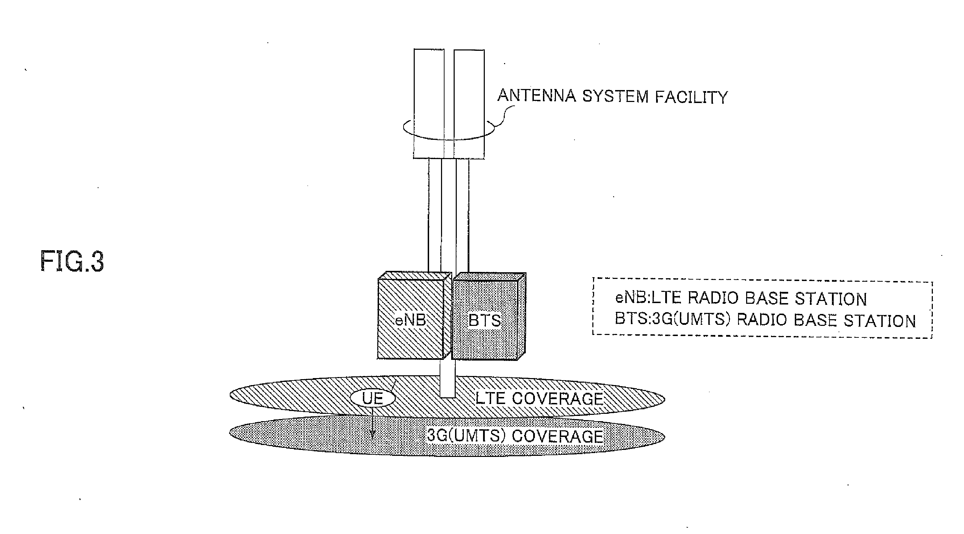

FIG. 3 shows a situation where the radio base station (eNB) of the first mobile communication system (LTE) and the radio base station (BTS) of the mobile communication system (3G) share the antenna system facility with each other. When the radio base stations of the first and second mobile communication systems are provided at the same position and each of the systems utilizes similar frequencies, it can be expected that the coverage of the first mobile communication system (LTE) and the coverage of the second mobile communication system (3G) are the same. If it is possible to successfully perform communications in the first mobile communication system (LTE), it is also possible to successfully perform communications in the second mobile communication system (3G). Therefore, the measurement of the radio quality of the second mobile communication system (3G) by the mobile station (UE) may be omitted during the handover from the first mobile communication system (LTE) to the second mobile communication system (3G).

(2) A second determination basis is such that, when a cell of the first mobile communication system is included in a cell of the second mobile communication system, it is determined that the coverage exists.

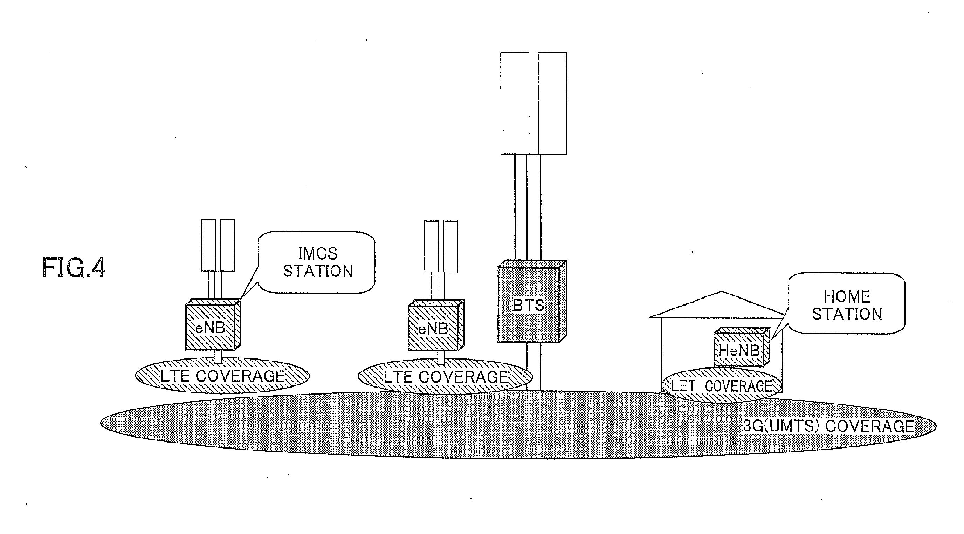

FIG. 4 shows a situation where the cells of the first mobile communication system (LTE) are included in the cell of the second mobile communication system (3G). In FIG. 4, areas of indoor stations (eNB, HeNB) are included in an area of an outdoor station (BTS). However, the differentiation between the outdoor and the indoor is not essential to the embodiment. The area of the outdoor station may further include a local area of an outdoor station, and the area of the indoor station may further include a local area of an indoor station. As the radio base stations of the first mobile communication system (LTE), the indoor station such as an Inbuilding Mobile Communication System (IMCS) station and a home radio base station (HeNB) may be considered. When these radio base stations are utilized, the services of the first mobile communication system (LTE) are provided in specific areas such as a building, an underground space, and a house. On the other hand, the services of the second mobile communication system (3G) are provided in the other area. When similar frequencies are utilized in the first and second mobile communication systems, it is expected that it is possible to successfully perform communications in the second mobile communication system (3G), provided that it is possible to successfully perform communications in the first mobile communication system (LTE). Therefore, in this case, the measurement of the radio quality of the second mobile communication system (3G) by the mobile station (UE) can be omitted during the handover from the first mobile communication system (LTE) to the second mobile communication system (3G).

(3) A third determination basis is such that, when a frequency band is shared by the first and second mobile communication systems, it is determined that the coverage exists. In a mobile communication system, various frequency bands are defined.

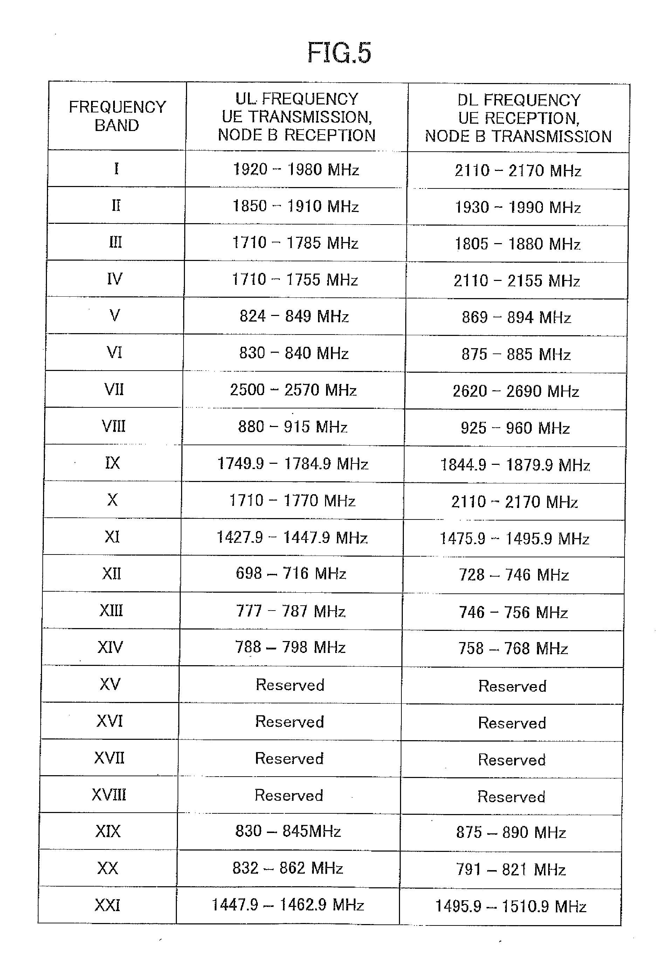

FIG. 5 shows an example of frequency bands. Such frequency bands are defined in "3GPP TS25.101 V8.10.0 (2010-03), 5.2." As it is described above, when similar frequencies are utilized by the first mobile communication system and the second mobile communication system, it is expected that a communication state in the first mobile communication system (LTE) and a communication state in the second mobile communication system (3G) are the same. In the third determination basis, the difference between frequencies is determined based on the difference between frequency bands.

For example, suppose that the first mobile communication system (LTE) is using 1920 - 1930 MHz (up link (UL)) and 2110 - 2120 MHz (down link (DL)). Further, suppose that the second mobile communication system (3G) is using 1930 - 1935 MHz (up link (UL)) and 2120 - 2125 MHz (down link (DL)). As shown in FIG. 5, the frequency band I is frequency ranges of 1920 - 1980 MHz (up link (UL)) and 2110 -2170 MHz (down link (DL)). In this case, the frequencies of the first and second mobile communication systems belong to the frequency band I. For the case of the third determination basis, the presence or absence of the coverage is determined depending on whether the frequencies used in both systems belong to the same frequency band. In the above-described case, since the frequencies belong to the frequency band I, it is determined that the coverage exists.

(4) A fourth determination basis is such that, when the actually measured radio quality is fine, it is determined that the coverage exists. This determination basis is the same as the measurement by steps S3, S4, and S5 of FIG. 1 in the point that the radio quality is actually measured. However, the measurement of the radio quality in the fourth determination basis is different from the measurement by steps S3, S4, and S5 in the point that the measurement of the radio quality in the fourth determination basis is performed by the radio base station while the measurement by steps S3, S4, and S5 is performed by the mobile station. For the case of the fourth determination basis, the radio base station (eNB) of the first mobile communication system (LTE) receives radio waves from the second mobile communication system (3G) and measures a receive direction and a reception level. Based on the measured values, the radio base station (eNB) determines the presence or absence of the coverage. For example, when the reception level is better than a predetermined threshold value, it may be determined that the coverage exists. Alternatively, the presence or absence of the coverage may be determined based on a relative relationship between the received power of the radio waves from the second mobile communication system (3G) and the transmission power from the radio base station (eNB) of the first mobile communication system (LTE). The radio base station (eNB) of the first mobile communication system (LTE) may measure the reception level at any suitable timing. Therefore, by measuring the reception level prior to the timing of steps S3, S4, and S5 in FIG. 1, delay of the handover of the mobile station (UE) can be avoided.

The above-described determination bases are for exemplification only. The presence or absence of the coverage may be determined by a determination basis other than these determination bases. Further, each of the above-described determination bases may be individually utilized. Alternatively, two or more of the above-described determination bases may be combined and used. From the viewpoint of more suitably and effectively determining the presence or absence of the coverage, it is preferable that, when it is determined by the third determination basis that the frequency band is shared, the presence or absence of the coverage be further determined by the first, second, and/or fourth determination basis.

In the above-described embodiment, the example has been explained where the voice service is provided. However, the present invention is not limited to the specific service. For example, instead of the voice service or in addition to the voice service, a positioning service may be utilized were the position of the mobile station (UE) is measured, for example, by using the GPS.

In the above-described embodiment, the example has been explained where the handover is from the LTE system to the 3G system. However, a handover in the reverse direction may be performed. Soon after the introduction of the LTE system, it is possible that the 3G system is more advantageous in the point that it is possible to provide various services. However, as the LTE system becomes widely adopted, the LTE system will be able to provide more fruitful services than those of the 3G system. In such a case, it is possible that a user being served in the 3G system performs the handover to the LTE system to seek a service that is not provided in the 3G system.

### <4. Modified examples>

### <4.1 Redirection>

In the above explanation, the mobile station is switched to a different system by performing the handover. However, the mobile station may be switched to the different system by performing a redirection, instead of the handover. The case of the handover is advantageous in the point that the mobile station can be switched in a short period of time. However, it is necessary that mobile station have a function to perform the process of the handover. It is disadvantageous in the point that, depending on the mobile station, the function to perform the process of the handover is not implemented. The case of the redirection is disadvantageous in the point that it takes time to switch due to re-connection. However, it is advantageous in the point that the redirection can be performed by a mobile station where the handover function has not been implemented. Since the re-connection is automatically performed by the system, an operation by a user is not required, but it is possible that the waiting time is slightly lengthened. As an example, a mobile station having a handover function may switch the system by performing the operations according to FIG. 1, while a mobile station not having the handover function switches the system by a method that will be explained below. Similar to the case of FIG. 1, in the modified example of the embodiment, when the coverage exists, the redirection is performed while omitting the measurement of the radio quality of the switching target system.

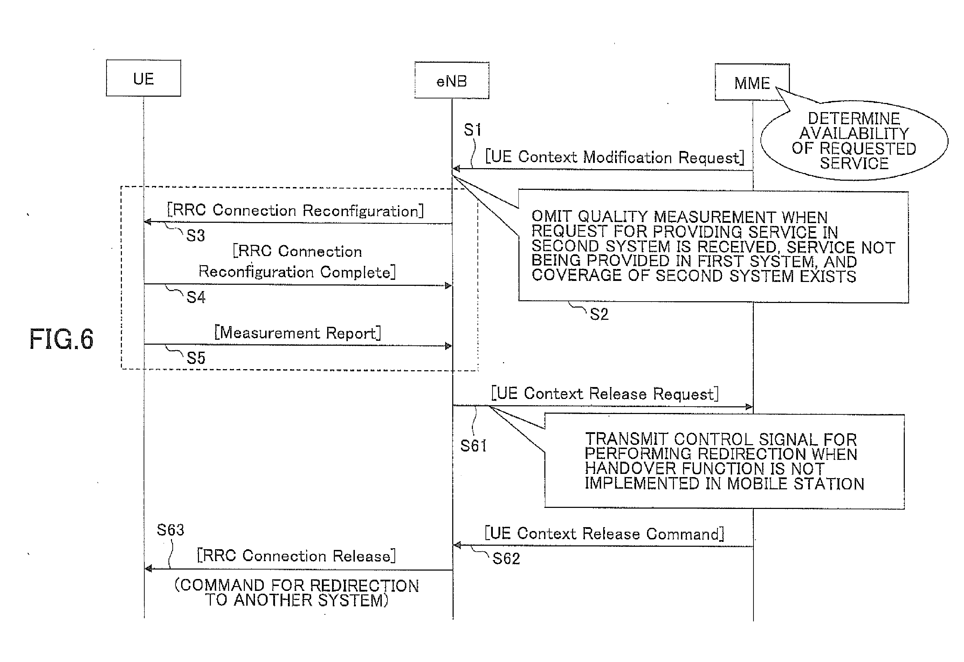

FIG. 6 shows a state where a redirection is performed, instead of the handover. Similar to the case of FIG. 1, the user of the mobile station (UE) being served by the first mobile communication system (LTE) desires the voice service, and the message indicating the intent is delivered (not shown) to the switching center (MME) through the radio base station (eNB). The voice service is not provided in the first mobile communication system (LTE), but it is provided in the second mobile communication system (3G). Therefore, the switching center (MME) determines that the user is to be switched from the first mobile communication system to the second mobile communication system. Steps S1-S5 are the same as those of FIG. 1.

At step S1, by transmitting the connection setting request signal (UE Context Modification Request) to the radio base station (eNB), the switching center (MME) reports that the mobile station (UE) is to be switched from the first mobile communication system (LTE) to the second mobile communication system (3G).

At step S2, the radio base station (eNB) confirms the presence or absence of the coverage of the second mobile communication system in its own cell. When the coverage of the second mobile communication system (3G) exists in the cell of the first mobile communication system (LTE), it is not necessary for the mobile station (UE) to measure the radio quality of the second mobile communication system. In this case, the radio base station (eNB) performs step S61 immediately after step S1.

At step S61, the radio base station (eNB) transmits a control signal (UE Context Release Request) for the redirection to the switching center (MME). Specifically, the control signal is a signal for requesting to release radio resources in the first mobile communication system (LTE). As described above, for the case of the redirection, the connection in the first mobile communication system (LTE) is terminated, and a connection is established in the second mobile communication system (3G). In the modified example, when the motile station does not include the handover function, the redirection is performed. When the mobile station includes the handover function, the handover is performed as shown in FIG. 1. However, this is not essential to the present invention. The mobile station having the handover function may perform the redirection.

At step S62, the switching center (MME) transmits a command (UE Context Release Command) for the redirection to the radio base station (eNB). With this, the radio resources in the second mobile communication system (LTE) are released.

Here, unlike the sequence of FIG. 1, the switching center (MME) transmits the command of step S62 to the radio base station (eNB) without communicating with the second mobile communication system, after transmitting the control signal of step S61.

At step S63, in response to the command for the redirection, the radio base station (eNB) transmits a redirection indicating signal (RRC Connection Release) to the mobile station (UE). In response to this, the mobile station (UE) starts connecting to the second mobile communication system (3G). In this case, no user operations are required, and the mobile station automatically starts the connection procedure, in response to the command. Though it is not shown in the figure, after the establishment of the line for the voice service in the second mobile communication system (3G), the provisioning of the voice service to the mobile station (UE) is started.

Since steps S2-S5 are the same as those of FIG. 1, the explanations are omitted.

### <4.2 Handover from a waiting state>

In the above explanation, the mobile station being in communication is switched to the different system by performing the handover or the redirection. However, the state is not limited to the state of being in communication. It is also possible to switch the system from a waiting state.

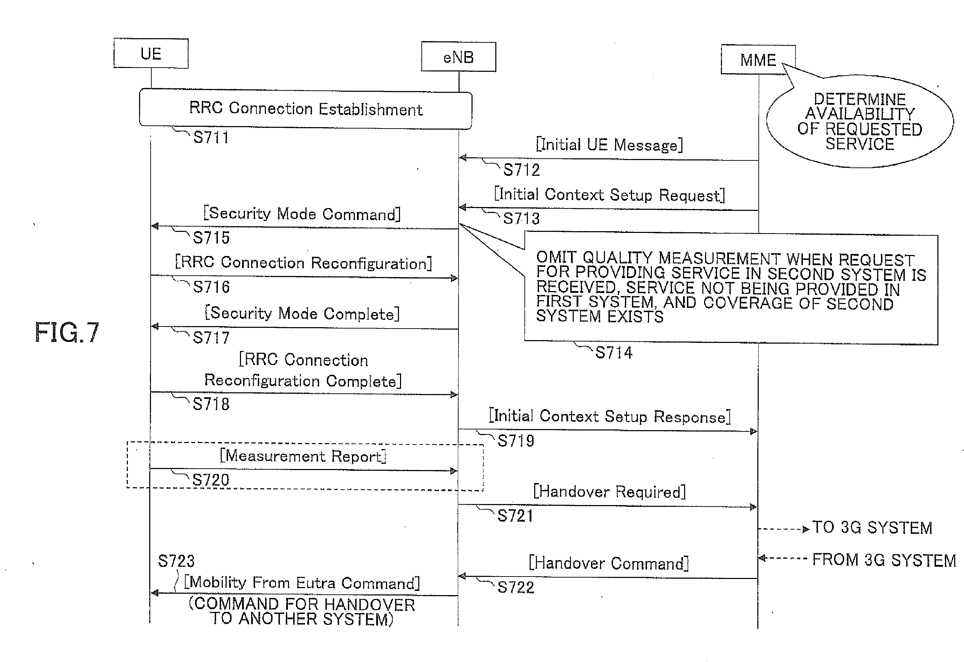

FIG. 7 shows a situation where the mobile station (UE) being in the waiting state in the first mobile communication system (LTE) performs the handover to the second mobile communication system (3G). Similar to the above-described cases, the voice service is not provided in the first mobile communication system (LTE), but it is provided in the second mobile communication system (3G).

At step S711, the user of the mobile station (UE) being in the waiting state in the first mobile communication system (LTE) desires the voice service, and in response to this, a connection is established between the mobile station (UE) and the radio base station (eNB) (RRC Connection Establishment). The radio base station (eNB) transmits a signal for a call connection to the switching center (MME) (S712), and the switching center (MME) returns a response (S713). In response to this, at step S714, the radio base station (eNB) confirms the presence or absence of the coverage of the second mobile communication system in its own cell. When the coverage of the second mobile communication system (3G) exists in the cell of the first mobile communication system (LTE), it is not necessary for the mobile station (UE) to measure the radio quality of the second mobile communication system. When the coverage does not exist, it is necessary for the mobile station (UE) to measure the radio quality of the second mobile communication system.

At step S715, the radio base station (eNB) transmits a Security Mode Command to the mobile station (UE). The Security Mode Command reports, for example, information regarding keys that are used for encryption of the communication.

At step S716, the radio base station (eNB) transmits the connection setting and measurement indicating signal (RRC Connection Reconfiguration) to the mobile station (UE). The connection setting and measurement indicating signal reports the time at which the mobile station (UE) is to measure the radio quality regarding the second mobile communication system, for example. Here, when it is determined, by the above-described coverage determination at step S714, that the coverage exists, it is not necessary for the mobile station (UE) to measure the radio quality of the second mobile communication system. However, when the coverage does not exist, it is necessary for the mobile station (UE) to measure the radio quality of the second mobile communication system.

At step S717, the mobile station (UE) responds to the Security Mode Command.

At step S718, the mobile station (UE) responds to the connecting setting and measurement indicating signal.

At step S719, the radio base station (eNB) returns a response with respect to the Initial Context Setup Request, which has been received at step S713, to the switching center (MME).

At step S720, the mobile station (UE) reports the measured value of the radio quality of the second mobile communication system by transmitting a Measurement Report to the radio base station (eNB). The transmission of the message at step S720 is performed when the coverage of the second mobile communication system (3G) does not exist in the cell of the first mobile communication system (LTE). When the coverage exists, it is not necessary for the mobile station (UE) to measure the radio quality of the second mobile communication system, and step S720 is omitted.

At step S721, the radio base station (eNB) transmits the handover preparation request signal (Handover Required) to the switching center (MME). With this, the switching center (MME) transmits a command to the second mobile communication system, so that the mobile station (UE) can perform the handover from the first mobile communication system to the second mobile communication system (3G).

At step S722, in response to the response signal from the second mobile communication system (3G), which is the destination of the handover, the switching center (MME) transmits the handover preparation signal and the Handover Command to the radio base station (eNB). For the simplicity of the illustration, the communications between the switching center (MME) and the second mobile communication system (3G), which is the destination of the switching, are not shown in the figure.

In response to the handover preparation signal, at step S723, the radio base station (eNB) transmits the handover indicating signal (Mobility From EUTRA Command) to the mobile station (UE). Though it is not shown in the figure, subsequently the mobile station (UE) transmits an up link signal to the second mobile communication system (3G), and the mobile station (UE) synchronizes with and performs the handover to the second mobile communication system. Then, the provisioning of the voice service to the mobile station (UE) is started, after the establishment of the line for the voice service in the second mobile communication system (3G).

### <4.3 Redirection from a waiting state>

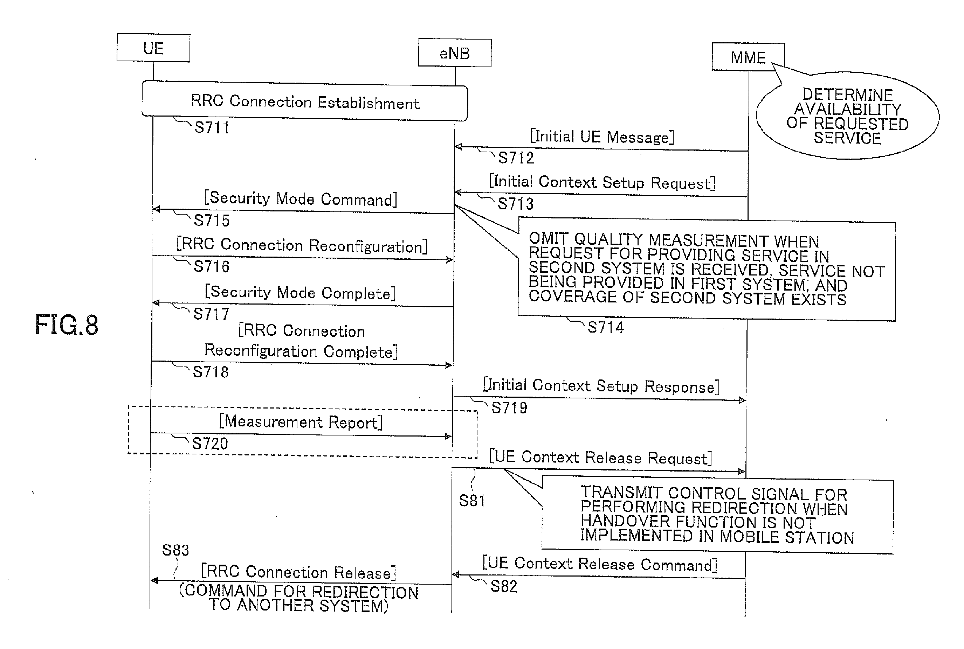

FIG. 8 shows a situation where the mobile station (UE) being in a waiting state in the first mobile communication system (LTE) performs the redirection to the second mobile communication system (3G). It is different from the sequence of FIG. 7 in the point that the redirection is performed, instead of the handover. Therefore, the procedures from step 711 to step S720 are the same as those explained in FIG. 7.

At step S81, the radio base station (eNB) transmits a control signal (UE Context Release Request) for the redirection to the switching center (MME). Specifically, the control signal is for requesting to release radio resources in the first mobile communication system (LTE). As described above, for the case of the redirection, the connection in the first mobile communication system (LTE) is terminated, and the connection is established with respect to the second mobile communication system (3G).

At step S82, the switching center (MME) transmits a command (UE Context Release Command) for the redirection to the radio base station (eNB). With this, the radio resources in the second mobile communication system (LTE) are released.

In response to the command for the redirection, at step S83, the radio base station (eNB) transmits the redirection indicating signal (RRC Connection Release) to the mobile station (UE). In response to this, the mobile station (UE) starts connecting to the second mobile communication system (3G). In this case, no user operations are required, and the mobile station automatically starts the connection procedure in response to the command. Though it is not shown in the figure, after the establishment of the line for the voice service in the second mobile communication system (3G), the provisioning of the voice service to the mobile station (UE) is started.

The present invention has been described with reference to specific embodiments, but the embodiments are illustrative, and variations, modifications, alterations and substitutions could be conceived by those skilled in the art. For example, the present invention may be applied to any appropriate mobile communication system for performing the inter-system handover. For example, the present invention may be applied to a W-CDMA system, a HSDPA/HSUPA based W-CDMA system, an LTE system, an LTE-Advanced system, an IMT-Advanced system, a WiMAX system, a Wi-Fi based system and the like. Specific examples of numerical values have been used in order to facilitate understandings of the invention. However, these numerical values are simply illustrative, and any other appropriate value may be used, except as indicated otherwise. The separations of the embodiments or the items are not essential to the present invention, and subject matter described in two or more items may be combined and used as necessary. Subject matter described in an item may be applied to the subject matter described in another item (provided that they do not contradict). For the convenience of explanation, the devices according to the embodiments of the present invention have been explained by using functional block diagrams. However, these devices may be implemented in hardware, software, or combinations thereof. The software may be prepared in any suitable storage medium such as a random access memory (RAM), a flash memory, a read only memory (ROM), an EPROM, an EEPROM, a register, a hard disk (HDD), a removable disk, a CD-ROM, a database, a server, and the like. The present invention is not limited to the above-described embodiments, and various variations, modifications, alterations, substitutions and so on are included, without departing from the spirit of the present invention.

The present international application claims priority based on Japanese Patent Application No. 2010-141075, filed on June 21, 2010, and the entire contents of which are hereby incorporated by reference.

## Claims

1. A radio base station for a first mobile communication system comprising:
a radio communication unit that wirelessly communicates with a mobile station, the mobile station being capable of communicating in the first mobile communication system and in a second mobile communication system;
a network communication unit that communicates with a switching center;
a determination unit that determines whether the mobile station is to measure radio quality in the second mobile communication system;
wherein, when a message received from the switching center by the network communication unit indicates that the mobile station is requesting a service, the service not being provided in the first mobile communication system, the service being provided in the second mobile communication system, the determination unit determines whether the measurement of the radio quality by the mobile station is required by confirming presence or absence of coverage of the second mobile communication system in a cell of the radio base station,
wherein, when the measurement of the radio quality is not required, the network communication unit requests of the switching center that the mobile station be switched to the second mobile communication system, without requesting the mobile station to measure the radio quality, and
wherein the radio communication unit reports to the mobile station that the mobile station is to be switched to the second mobile communication system, in response to a command from the switching center.

2. The radio base station according to claim 1,
wherein, when a frequency band of the first mobile communication system and a frequency band of the second mobile communication system are shared with each other, the determination unit determines that the coverage of the second mobile communication system exists in the cell of the radio base station.

3. The radio base station according to claim 1,
wherein, when a frequency band of the first mobile communication system and a frequency band of the second mobile communication system are shared with each other, and when at least a portion of an antenna for the first mobile communication system is shared with an antenna for the second mobile communication system, the determination unit determines that the coverage of the second mobile communication system exists in the cell of the radio base station.

4. The radio base station according to claim 1,
wherein, when a frequency band of the first mobile communication system and a frequency band of the second mobile communication system are shared with each other, and when the cell of the radio base station is included in a cell of the second mobile communication system, the determination unit determines that the coverage of the second mobile communication system exists in the cell of the radio base station.

5. The radio base station according to claim 1,
wherein, when a frequency band of the first mobile communication system and a frequency band of the second mobile communication system are shared with each other, and when a radio wave from the second mobile communication system received by the radio base station satisfies a predetermined condition, the determination unit determines that the coverage of the second mobile communication system exists in the cell of the radio base station.

6. The radio base station according to claim 1,
wherein, when the determination unit determines that the measurement of the radio quality is required, the radio communication unit reports to the mobile station that the radio quality in the second mobile communication system is to be measured, and the radio communication unit receives a measured value of the radio quality.

7. The radio base station according to claim 1,
wherein the service is a voice service.

8. The radio base station according to claim 1,
wherein the service is a positioning service.

9. A method for a radio base station of a first mobile communication system, comprising:
determining, when a message received from a switching center by the radio base station indicates that a mobile station is requesting a service, the service not being provided in a first mobile communication system, the service being provided in a second mobile communication system, whether a measurement by the mobile station is required by confirming presence or absence of coverage of the second mobile communication system in a cell of the radio base station,
requesting, when the measurement of the radio quality is not required, of the switching center that the mobile station be switched to the second mobile communication system, without requesting the mobile station to measure the radio quality, and
reporting to the mobile station that the mobile station is to be switched to the second mobile communication system, in response to a command from the switching center.
